# EUROPEAN PATENT SPECIFICATION

(11) **EP 4 427 951 B1**
(45) Date of publication and mention of the grant of the patent: **21.05.2025**
(21) Application number: 23160580.9
(22) Date of filing: 07.03.2023
(51) Int. Cl.: B60D 1/06, B60D 1/24, B60D 1/54

(54) **TOW HITCH ASSEMBLY COMPRISING A ONE-WAY WRAP SPRING CLUTCH**
ANHÄNGERKUPPLUNGSANORDNUNG MIT EINER EINWEG-SPANNFEDERKUPPLUNG
ATTELAGE DE REMORQUAGE COMPRENANT UN EMBRAYAGE À RESSORT ENROULÉ UNIDIRECTIONNEL

(43) Date of publication of application: 11.09.2024
(73) Proprietor: Brink Towing Systems B.V., 7951 CX Staphorst (NL); Oechsler AG, 91522 Ansbach (DE)
(72) Inventor: Keijer, Maarten, 7951 CX Staphorst (NL); Motzet, Daniel, 91522 Ansbach (DE); Kleeberger, Friedrich, 91567 Herrieden (DE); Schmidt, Winfried, 91717 Wassertrüdingen (DE)
(74) Representative: Valea AB

(56) References cited:
- EP-A1- 3 571 066
- EP-A1- 4 124 476
- EP-A2- 2 546 539
- EP-A2- 2 671 737
- DE-A1- 102017 010 409
- DE-A1- 102021 116 182
- US-A1- 2021 370 731

## Description

### TECHNICAL FIELD

The present disclosure relates to electrically operated retractable tow hitch assemblies for motor vehicles. Specifically, the present disclosure relates to a mechanism for securing a tow hitch assembly in its stowed and/or deployed position.

### BACKGROUND

Tow hitch assemblies are commonly used on motor vehicles to allow the vehicle to pull a load after the vehicle or carry a load on a hitch arm of the tow hitch assembly. EP 3 571 066 A1 discloses such a tow hitch assembly. Some tow hitch assemblies are electrically controlled such that the hitch arm is movable between a stowed position and a deployed position by an actuator of the tow hitch assembly. A rotational movement of an electric actuator of the tow hitch assembly drives a rotatable member of a movement mechanism of the tow hitch assembly controlling movement of the hitch arm. When the actuator is operating it provides a high torque to control rotation of the rotatable member, but when the actuator is not operative, the torque of the actuator is much lower and vibrations may induce movements of various parts of the movement mechanism, which in turn risks displacing the hitch arm away from its stowed and/or deployed position. Inadvertent movement away from the stowed position would introduce a risk of the hitch arm hitting foreign objects when the vehicle is in motion. Likewise, inadvertent movement away from the deployed position would introduce a risk of damaging the vehicle or losing a trailer or object attached onto the hitch arm, such as a bicycle carrier. and/or damaging the vehicle or an object attached to the hitch arm, such as a bicycle carrier.

A problem with some prior art tow hitch assemblies is thus inadvertent movement of the hitch arm away from its stowed and/or deployed position.

### SUMMARY

Accordingly, an object of the present disclosure is to mitigate inadvertent movement of a hitch arm of a tow hitch assembly away from a stowed and/or a deployed position of the hitch arm.

According to a first aspect of the present disclosure, this and other objects are achieved by a tow hitch assembly as defined in claim 1, with alternative embodiments defined in its dependent claims. The tow hitch assembly is suitable for attachment to a vehicle. The tow hitch assembly comprises a hitch arm, a housing attachable to the vehicle, and an actuator assembly attached to the housing. The hitch arm is attached to a first shaft rotatably supported in a cylindrical cavity of a support means for rotation about a first rotational axis. The support means is attached to, or integrated with, the housing.

The tow hitch assembly further comprises a one-way wrap spring clutch. The one-way wrap spring clutch comprises a first member rotatable about the first rotational axis, and a second member rotatable about the first rotational axis. The first member is operatively connected to the actuator assembly such that the actuator assembly is able to control rotation of the first member.

The one-way wrap spring clutch is configured such that the first member is able to drive the second member in any rotational direction about the first rotational axis, and such that a wrap spring of the one-way wrap spring clutch prevents the second member from driving the first member upon rotation of the second member in any rotational direction about the first rotational axis.

The second member is operatively connected to the first shaft. Rotation of the second member causes rotation of the first member and vice versa. Accordingly, forced movement of the second member caused by forced movement of the first shaft is prevented by the wrap spring clutch. By arranging the second member and the first shaft such that they are both rotatable about the first rotational axis, a compact and robust device is achieved with little play.

The second member may be attached to a drive shaft, or may comprises the drive shaft, or may be connected to the drive shaft via mechanical attachment means adapted to prevent relative rotation between the second member and the drive shaft. The drive shaft is provided with an outer thread cooperating with the threads of the threaded central recess of the first shaft. Also, the first shaft is axially movable relatively the support means along the first rotational axis. One of said first shaft and the support means is provided with a helical guide groove extending around the first rotational axis. The other one of said first shaft and the support member is provided with a first protrusion slidably engaging the guide grove such that axial movement of the first shaft brings about a rotational movement of the first shaft. The rotational movement is controlled by the guide groove. The first shaft is provided with a threaded central recess aligned with the first rotational axis.

Rotation of the second member causes rotation of the drive shaft and vice versa. Rotation of the drive shaft controls axial displacement of the first shaft to which the hitch arm is attached. The engagement between the first protrusion and the helical groove controls rotation of the first shaft as a function of an axial position of the drive shaft. Such an operational connection between the second member and the first shaft enables control of both rotation and axial displacement of the towing hitch about the first rotational axis, whilst providing a robust mechanism for controlling movement of the hitch arm.

The wrap spring may be, at least partly, provided within a cylindrical cavity of the housing. A first end portion of said wrap spring is provided with a second protrusion, and a second end portion of said wrap spring is provided with a third protrusion. The first member is adapted to engage the second and third protrusions of the wrap spring with a rotational play, said engagement being such that the first member is able to rotate the wrap spring within the housing without locking the wrap spring to the housing. The second member is adapted to engage the second and third protrusions of the wrap spring with a rotational play, said engagement between the second member and the second and third protrusions being such that the second member expands the wrap spring upon forced rotation of the second member caused by rotation of the drive shaft, thereby locking the wrap spring to the housing.

When the first member drives one of the second or third protrusions of the wrap spring, the wrap spring is brought to rotate without being forced to radially expand, possibly with a slight radial contraction of the wrap spring. However, when the second member drives one of the second or third protrusions of the wrap spring, the wrap spring is being forced to radially expand and therefore frictionally engages the cylindrical cavity of the housing such that the wrap spring is prevented from rotating. The frictional engagement between the wrap spring and the cylindrical cavity of the housing enables a compact and robust one-way clutch functionality.

The second and third protrusions of the wrap spring extend radially inwards with respect to the first rotational axis.

By extending the second and third protrusions radially inwards, the first and second members of the clutch are able to engage the wrap spring through the wrap spring, thereby enabling a smaller footprint of the one-way wrap spring clutch.

### BRIEF DESCRIPTION OF THE DRAWINGS

Fig. 1 shows a first embodiment of a towing hitch assembly.
Fig. 2 shows a cross-sectional view of the towing hitch assembly also shown in fig. 1.
Fig. 3 shows a schematic cross-sectional view of a one-way wrap spring clutch of the towing hitch assembly.

### DETAILED DESCRIPTION

As mentioned above, an object of the present disclosure is to mitigate inadvertent movement of a hitch arm 2 of a tow hitch assembly 1 away from a stowed position and/or away from a deployed position.

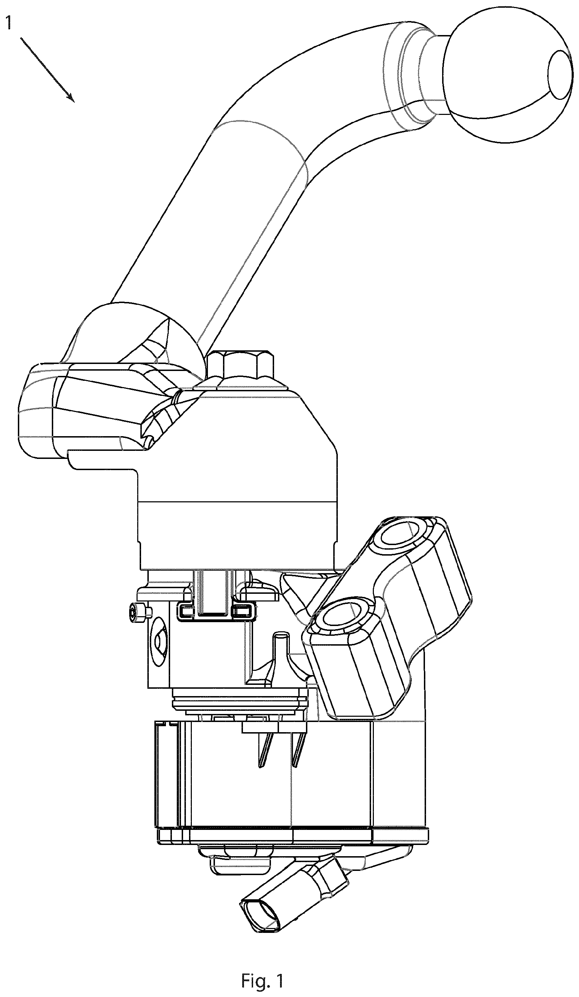

According to an aspect, this object is achieved by a tow hitch assembly 1. A first embodiment of the tow hitch assembly 1 is shown in figs. 1-2. The tow hitch assembly 1 is suitable for attachment to a vehicle, such as a truck or a car. The tow hitch assembly 1 comprises a hitch arm 2, a housing 3 attachable to the vehicle, and an actuator assembly 4 attached to the housing 3. The hitch arm 2 is attached to a first shaft 5 rotatably supported in a cylindrical cavity of a support means 6 for rotation about a first rotational axis A. The support means 6 is attached to, or integrated with, the housing 3. The first shaft 5 is axially movable relatively the support means 6 along the first rotational axis A. One of said first shaft 5 and the support means 6 is provided with a helical guide groove 7 extending around the first rotational axis A, and the other one of said first shaft 5 and the support member 6 is provided with a first protrusion 16 slidably engaging the guide grove 7. The sliding engagement is such that axial movement of the first shaft 5 brings about a rotational movement of the first shaft 5, said rotational movement being controlled by the guide groove 7. The first shaft 5 is provided with a threaded central recess 8 aligned with the first rotational axis A. As will be described below, the thread of the central recess enables movement of the first shaft 5 along the first rotational axis A.

The tow hitch assembly 1 comprises a one-way wrap spring clutch 9. The one-way wrap spring clutch 9 comprises a first member 10 rotatable about the first rotational axis A, and a second member 11 rotatable about the first rotational axis A. The first member 10 is operatively connected to the actuator assembly 4 such that the actuator assembly 4 is able to control rotation of the first member 10. The rotation could be provided by operation of an actuator which may be an electric motor comprised in the actuator assembly 4. Any suitable operative connection between the actuator assembly 4 and the first member 10 is feasible, such as a fixed connection between an output shaft of the actuator assembly 4 and the first member 10, or a gear connection between the output shaft and the first member 10.

The one-way wrap spring clutch 9 is configured such that the first member 10 is able to drive the second member 11, directly or indirectly, in any rotational direction about the first rotational axis A. The one-way wrap spring clutch 9 is further configured such that a wrap spring 12 of the one-way wrap spring clutch 9 prevents the second member 11 from driving the first member 10 upon rotation of the second member 11 in any rotational direction about the first rotational axis A.

Any suitable one-way wrap spring clutch design could be used as long it provides this functionality. One-way wrap spring clutches are as such known in the art. Typically, a wrap spring clutch comprises a helical coil extending along a rotational axis. When the helical coil is exerted to a torque about the rotational axis, the helical coil either expands or contracts, depending on the direction of the applied torque. The expansion or contraction may be utilized to enable the helical coil to frictionally engage a shaft inside the helical coil upon contraction, or to frictionally engage a cylindrical surface around the helical coil, upon expansion of the helical coil.

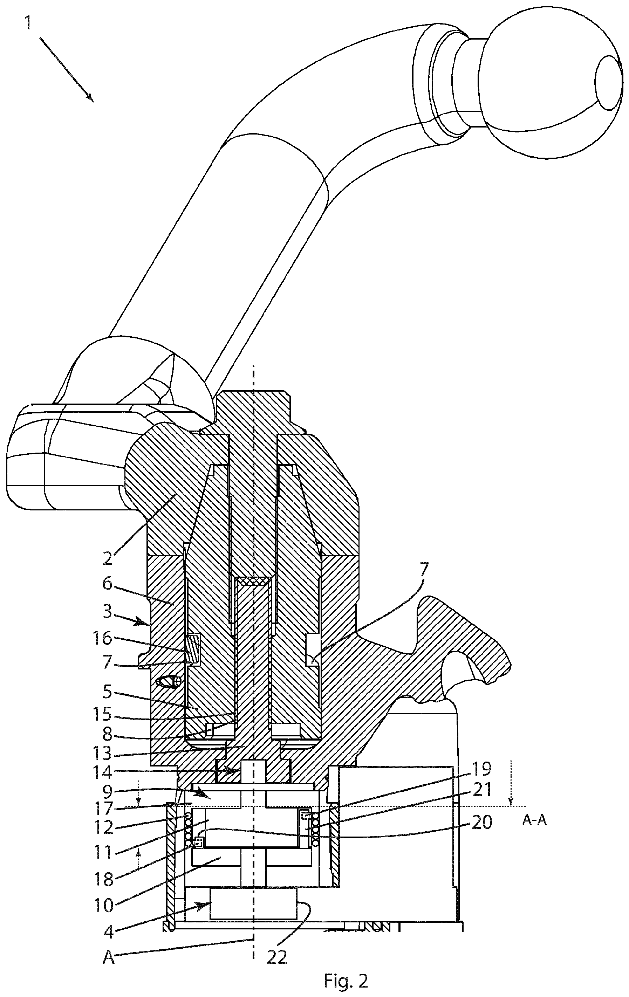

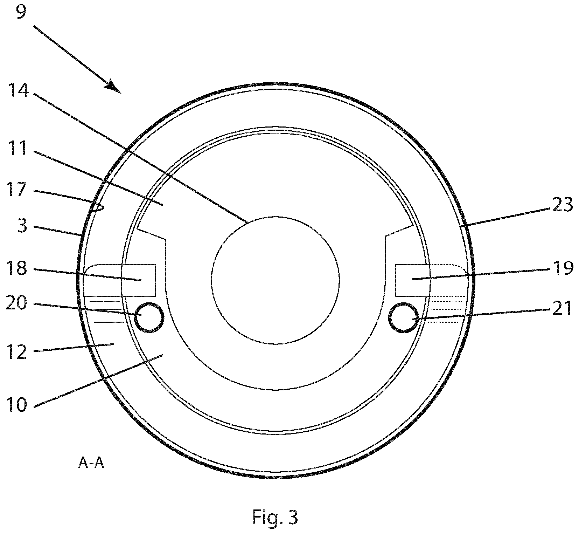

In the embodiment shown in figs. 2 and 3, the helical coil/wrap spring 12 is able to frictionally engage the surrounding cylindrical cavity 17 of the housing 3, thereby preventing further rotation of the wrap spring 12.

The second member 11 of the clutch 9 is attached to, or comprises, a drive shaft 13, or is connected to the drive shaft 13 via mechanical attachment means 14 adapted to prevent relative rotation between the second member 11 and the drive shaft 13. For example, the mechanical attachment means 14 could comprise cooperating splines provided on the second member 11 and on the drive shaft 13, respectively.

The drive shaft 13 is provided with an outer thread 15 cooperating with the threads of the threaded central recess 8 of the first shaft 5.

Rotation of the second member 11 causes rotation of the drive shaft 13 and vice versa. Rotation of the drive shaft 13 controls axial displacement along the first rotational axis A of the first shaft 5 to which the hitch arm 2 is attached. The engagement between the first protrusion 16 and the helical guide groove 7 prevents the first shaft 5 from co-rotating with the drive shaft 13 and controls rotation of the first shaft 5 as a function of an axial position of the drive shaft 13 relatively the support means 6. By providing the second member 11 of the one-way wrap spring clutch 9 axially aligned with the drive shaft 13 and connected to the drive shaft 13 such that the second member 11 rotates together with the drive shaft 13, a robust mechanism for controlling movement of the hitch arm 2 is achieved without gears, thus providing a locking mechanism with little to no play and low risk of failure.

The wrap spring 12 is, at least partly, provided within a cylindrical cavity 17 of the housing 3. A first end portion of said wrap spring 12 is provided with a second protrusion 18, and a second end portion of said wrap spring 12 is provided with a third protrusion 19.

The first member 10 is adapted to engage the second 18 and third 19 protrusions of the wrap spring 12 with a rotational play.

In this embodiment, the first member 10 is provided with a first pin 20 for engaging the second protrusion 18, and with a second pin 21 extending through the wrap spring 12 for engaging the third protrusion 19, as shown in figs. 2 and 3. The engagement is such that the first member 10 is able to rotate the wrap spring 12 within the housing 3 without locking the wrap spring 12 to the housing 3.

The second member 11 is adapted to engage the second 18 and third 19 protrusions of the wrap spring 12 with a rotational play, said engagement between the second member 11 and the second 18 and third 19 protrusions being such that the second member 11 expands the wrap spring 12 upon forced rotation of the second member 11 caused by rotation of the drive shaft 13, thereby locking the wrap spring 12 to the housing 3. Upon forced rotation of the second member 11 caused by rotation of the drive shaft 13, the second member 11 will first move relatively the wrap spring 12 to consume any rotational play between the second member 11 and the wrap spring 12, and then the second member 11 will gradually expand the wrap spring 12 by additional rotation of the second member 11 until the wrap spring 12 is prevented from further expansion by the surrounding wall of the housing 3. During expansion of the wrap spring 12, friction between the wrap spring 12 and the cylindrical cavity 17 prevents rotation of the wrap spring 12. Depending on, for example, the dimension of the wrap spring and the fit between wrap spring 12 and housing, the amount of the additional rotation required by the second member 11 varies within a predetermined angular range. An appropriate amount of rotational play is provided between the first member 10 and the wrap spring 12, thereby allowing the first member 10 to rotate together with the second member 11 without the first member 10 forcing the other end of the wrap spring 12 (i.e., the end not engaged by the second member 11) to also rotate.

Typically, the rotational play between the second member 11 and the wrap spring 12 is chosen large enough to ensure that the wrap spring 12 does not lock when being driven by the first member 10.

Hence, when the first member 10 drives one of the second 18 or third 19 protrusions of the wrap spring 12, the wrap spring 12 is brought to rotate without being forced to radially expand, thus without frictionally locking the wrap spring to the housing 3. In fact, the wrap spring 12 may contract slightly when being driven by the first member 10. However, when the second member 11 drives one of the second 18 or third 19 protrusions of the wrap spring 12, the wrap spring 12 is being forced to radially expand and therefore frictionally engages the cylindrical cavity 17 of the housing such that the wrap spring is prevented from rotating.

The wrap spring clutch 9 provides a compact and robust one-way clutch functionality.

The second 18 and third 19 protrusions of the wrap spring 12 extend radially inwards with respect to the first rotational axis A.

By extending the second 18 and third 19 protrusions radially inwards, with respect to the first rotational axis A, the first 10 and second 11 members of the clutch 9 are able to engage the wrap spring 12 through the wrap spring 12, thereby enabling a smaller footprint of the one-way wrap spring clutch 9.

In other embodiments, the second and third protrusions may alternatively extend in any other suitable way, rather than radially inwards; For example, parallel to the first rotational axis A, or radially outwards with respect to the first rotational axis A.

In other embodiments, any other suitable one-way wrap spring clutch design could alternatively be used instead.

The actuator assembly comprises an actuator comprising an electric motor. In other embodiments, the actuator may comprise any other suitable motor, such as a hydraulically powered motor.

The wrap spring comprises a coil spring or wound coil extending along the first rotational axis A, as indicated in figs. 2 and 3.

**Table of reference numerals**

| | |
|---|---|
| 1 | tow hitch assembly |
| 2 | hitch arm |
| 3 | housing |
| 4 | actuator assembly |
| 5 | first shaft |
| 6 | support means |
| 7 | helical guide groove |
| 8 | threaded central recess |
| 9 | one-way wrap spring clutch |
| 10 | first member of clutch |
| 11 | second member of clutch |
| 12 | wrap spring |
| 13 | drive shaft |
| 14 | mechanical attachment means between second member and drive shaft |
| 15 | outer thread of drive shaft |
| A | first rotational axis |
| 16 | first protrusion |
| 17 | cylindrical cavity of housing |
| 18 | second protrusion |
| 19 | third protrusion |
| 20 | first pin of first member |
| 21 | second pin of first member |

## Claims

1. A tow hitch assembly (1) for attachment to a vehicle, said tow hitch assembly (1) comprising a hitch arm (2), a housing (3) attachable to the vehicle, and an actuator assembly (4) attached to the housing (3),
said hitch arm (2) being attached to a first shaft (5) rotatably supported in a cylindrical cavity of a support means (6) attached to, or integrated with, the housing (3) for rotation about a first rotational axis (A),
**characterized in that**
said tow hitch assembly (1) further comprising a one-way wrap spring clutch (9) said one-way wrap spring clutch (9) comprising a first member (10) rotatable about the first rotational axis (A), and a second member (11) rotatable about the first rotational axis (A),
said first member (10) being operatively connected to the actuator assembly (4) such that the actuator assembly (4) is able to control rotation of the first member (10),
said one-way wrap spring clutch (9) being configured such that the first member (10) is able to drive the second member (11) in any rotational direction about the first rotational axis (A), and such that a wrap spring (12) of the one-way wrap spring clutch (9) prevents the second member (11) from driving the first member (10) upon rotation of the second member (11) in any rotational direction about the first rotational axis (A),
wherein the second member (11) is operatively connected to the first shaft.

2. A tow hitch assembly (1) according to claim 1, wherein the first shaft (5) is axially movable relatively the support means (6) along the first rotational axis (A),
one of said first shaft (5) and the support means (6) being provided with a helical guide groove (7) extending around the first rotational axis (A), and the other one of said first shaft (5) and the support member (6) being provided with a first protrusion (16) slidably engaging the guide grove (7) such that axial movement of the first shaft (5) brings about a rotational movement of the first shaft (5), said rotational movement being controlled by the helical guide groove (7),
said first shaft (5) being provided with a threaded central recess (8) aligned with the first rotational axis (A),
wherein the second member (11) is attached to a drive shaft (13), or comprises the drive shaft (13), or is connected to the drive shaft (13) via mechanical attachment means (14) adapted to prevent relative rotation between the second member (11) and the drive shaft (13),
wherein the drive shaft (13) is provided with an outer thread (15) cooperating with the threads of the threaded central recess (8) of the first shaft (5).

3. A tow hitch assembly (1) according to any one of claims 1-2, wherein the wrap spring (12) is, at least partly, provided within a cylindrical cavity (17) of the housing (3),
a first end portion of said wrap spring (12) being provided with a second protrusion (18), and a second end portion of said wrap spring (12) being provided with a third protrusion (19),
wherein the first member (10) is adapted to engage the second (18) and third (19) protrusions of the wrap spring (12) with a rotational play, said engagement being such that the first member (10) is able to rotate the wrap spring (12) within the housing (3) without locking the wrap spring (12) to the housing (3), and
wherein the second member (11) is adapted to engage the second (18) and third (19) protrusions of the wrap spring (12) with a rotational play, said engagement between the second member (11) and the second (18) and third (19) protrusions being such that the second member (11) expands the wrap spring (12) upon forced rotation of the second member (11) caused by rotation of the first shaft (5), thereby locking the wrap spring (12) to the housing (3).

4. A tow hitch assembly (1) according to claim 3, wherein the second (18) and third (19) protrusions of the wrap spring (12) extend radially inwards with respect to the first rotational axis (A).

5. A tow hitch assembly (1) according to any one of claims 1-4, wherein the actuator assembly comprises an actuator comprising an electric motor.

6. A tow hitch assembly (1) according to any one of claims 1-5, wherein the wrap spring comprises a coil spring or wound coil.

## Patentansprüche

1. Anhängerkupplungsanordnung (1) zur Befestigung an einem Fahrzeug, wobei die Anhängerkupplungsanordnung (1) einen Kupplungsarm (2), ein am Fahrzeug befestigbares Gehäuse (3) und eine am Gehäuse (3) befestigte Stellantriebsbaugruppe (4) umfasst,
wobei der Kupplungsarm (2) an einer ersten Welle (5) befestigt ist, die in einem zylindrischen Hohlraum einer am Gehäuse (3) befestigten oder damit integrierten Lagerungseinrichtung (6) drehbar gelagert ist, um sich um eine erste Drehachse (A) zu drehen,
**dadurch gekennzeichnet, dass**
die Anhängerkupplungsanordnung (1) ferner eine Einweg-Schlingfederkupplung (9) umfasst,
wobei die Einweg-Schlingfederkupplung (9) ein erstes Element (10), das um die erste Drehachse (A) drehbar ist, und ein zweites Element (11), das um die erste Drehachse (A) drehbar ist, umfasst,
wobei das erste Element (10) mit der Stellantriebsbaugruppe (4) wirkverbunden ist, so dass die Stellantriebsbaugruppe (4) fähig ist, die Drehung des ersten Elements (10) zu steuern,
wobei die Einweg-Schlingfederkupplung (9) so konfiguriert ist, dass das erste Element (10) fähig ist, das zweite Element (11) in jeder Drehrichtung um die erste Drehachse (A) anzutreiben, und so, dass eine Schlingfeder (12) der Einweg-Schlingfederkupplung (9) verhindert, dass das zweite Element (11) das erste Element (10) antreibt, wenn sich das zweite Element (11) in einer beliebigen Drehrichtung um die erste Drehachse (A) dreht,
wobei das zweite Element (11) mit der ersten Welle wirkverbunden ist.

2. Anhängerkupplungsanordnung (1) nach Anspruch 1, wobei die erste Welle (5) bezüglich der Lagerungseinrichtung (6) entlang der ersten Drehachse (A) axial beweglich ist,
wobei eine von der ersten Welle (5) und der Lagerungseinrichtung (6) mit einer wendelförmigen Führungsnut (7) versehen ist, die um die erste Drehachse (A) verläuft, und die andere von der ersten Welle (5) und der Lagerungseinrichtung (6) mit einem ersten Vorsprung (16) versehen ist, der im Gleiteingriff mit der Führungsnut (7) ist, so dass eine Axialbewegung der ersten Welle (5) eine Drehbewegung der ersten Welle (5) bewirkt, wobei die Drehbewegung durch die wendelförmige Führungsnut (7) geführt wird,
wobei die erste Welle (5) mit einer mittigen Gewindeausnehmung (8) versehen ist, die an der ersten Drehachse (A) ausgerichtet ist,
wobei das zweite Element (11) an einer Antriebswelle (13) befestigt ist oder die Antriebswelle (13) umfasst oder mithilfe einer mechanischer Befestigungseinrichutng (14), die so ausgelegt ist, dass sie eine relative Drehung zwischen dem zweiten Element (11) und der Antriebswelle (13) verhindert, mit der Antriebswelle (13) verbunden ist,
wobei die Antriebswelle (13) mit einem Außengewinde (15) versehen ist, das mit dem Gewinde der mittigen Gewindeausnehmung (8) der ersten Welle (5) zusammenwirkt.

3. Anhängerkupplungsanordnung (1) nach einem der Ansprüche 1 bis 2, wobei die Schlingfeder (12) zumindest teilweise in einem zylindrischen Hohlraum (17) des Gehäuses (3) bereitgestellt ist,
wobei ein erster Endabschnitt der Schlingfeder (12) mit einem zweiten Vorsprung (18) versehen ist und ein zweiter Endabschnitt der Schlingfeder (12) mit einem dritten Vorsprung (19) versehen ist,
wobei das erste Element (10) für einen Eingriff mit dem zweiten (18) und dritten (19) Vorsprung der Schlingfeder (12) mit Drehspiel ausgelegt ist, wobei der Eingriff derart ist, dass das erste Element (10) die Schlingfeder (12) innerhalb des Gehäuses (3) drehen kann, ohne die Schlingfeder (12) am Gehäuse (3) zu arretieren, und
wobei das zweite Element (11) für einen Eingriff mit dem zweiten (18) und dritten (19) Vorsprung der Schlingfeder (12) mit Drehspiel ausgelegt ist, wobei der Eingriff zwischen dem zweiten Element (11) und dem zweiten (18) und dritten (19) Vorsprung derart ist, dass das zweite Element (11) die Schlingfeder (12) bei einer durch Drehung der ersten Welle (5) verursachten erzwungenen Drehung des zweiten Elements (11) dehnt und dadurch die Schlingfeder (12) am Gehäuse (3) arretiert.

4. Anhängerkupplungsanordnung (1) nach Anspruch 3, wobei sich der zweite (18) und dritte (19) Vorsprung der Schlingfeder (12) in Bezug auf die erste Drehachse (A) radial nach innen erstrecken.

5. Anhängerkupplungsanordnung (1) einem der Ansprüche 1 bis 4, wobei die Stellantriebsbaugruppe einen Stellantrieb mit einem Elektromotor umfasst.

6. Anhängerkupplungsanordnung (1) nach einem der Ansprüche 1 bis 5, wobei die Schlingfeder eine Schraubenfeder oder Wickelspule ist.

## Revendications

1. Ensemble attelage de remorquage (1) destiné à être fixé à un véhicule, ledit ensemble attelage de remorquage (1) comprenant un bras d'attelage (2), un logement (3) pouvant être fixé au véhicule, et un ensemble actionneur (4) fixé au logement (3),
ledit bras d'attelage (2) étant fixé à un premier arbre (5) supporté de manière rotative dans une cavité cylindrique d'un moyen de support (6) fixé ou intégré au logement (3) pour une rotation autour d'un premier axe de rotation (A),
**caractérisé en ce que**
ledit ensemble attelage de remorquage (1) comprenant en outre un embrayage à ressort enveloppant unidirectionnel (9),
ledit embrayage à ressort enveloppant unidirectionnel (9) comprenant un premier élément (10) rotatif autour du premier axe de rotation (A) et un second élément (11) rotatif autour du premier axe de rotation (A),
ledit premier élément (10) étant relié de manière fonctionnelle à l'ensemble actionneur (4) de telle sorte que l'ensemble actionneur (4) est en mesure de commander la rotation du premier élément (10),
ledit embrayage à ressort enveloppant unidirectionnel (9) étant conçu de telle sorte que le premier élément (10) est en mesure d'entraîner le second élément (11) dans un sens de rotation quelconque autour du premier axe de rotation (A), et de telle sorte qu'un ressort enveloppant (12) de l'embrayage à ressort enveloppant unidirectionnel (9) empêche le second élément (11) d'entraîner le premier élément (10) lors de la rotation du second élément (11) dans un sens de rotation quelconque autour du premier axe de rotation (A),
dans lequel le second élément (11) est relié de manière fonctionnelle au premier arbre.

2. Ensemble attelage de remorquage (1) selon la revendication 1, dans lequel le premier arbre (5) est axialement mobile par rapport au moyen de support (6) le long du premier axe de rotation (A),
l'un dudit premier arbre (5) et du moyen de support (6) étant pourvu d'une rainure de guidage hélicoïdale (7) s'étendant autour du premier axe de rotation (A), et l'autre dudit premier arbre (5) et du moyen de support (6) étant pourvu d'une première saillie (16) venant en prise de manière coulissante dans la rainure de guidage (7) de telle sorte que le mouvement axial du premier arbre (5) amène un mouvement de rotation du premier arbre (5), ledit mouvement de rotation étant commandé par la rainure de guidage hélicoïdale (7),
ledit premier arbre (5) étant pourvu d'un évidement central fileté (8) aligné sur le premier axe de rotation (A),
dans lequel le second élément (11) est fixé à un arbre d'entraînement (13), ou comprend l'arbre d'entraînement (13), ou est relié à l'arbre d'entraînement (13) par l'intermédiaire d'un moyen de fixation mécanique (14) adapté pour empêcher la rotation relative entre le second élément (11) et l'arbre d'entraînement (13),
dans lequel l'arbre d'entraînement (13) est pourvu d'un filetage extérieur (15) qui coopère avec les filetages de l'évidement central fileté (8) du premier arbre (5).

3. Ensemble attelage de remorquage (1) selon l'une quelconque des revendications 1 à 2, dans lequel le ressort enveloppant (12) est, au moins en partie, prévu au sein d'une cavité cylindrique (17) du logement (3),
une première partie d'extrémité dudit ressort enveloppant (12) étant pourvue d'une deuxième saillie (18), et une seconde partie d'extrémité dudit ressort enveloppant (12) étant pourvue d'une troisième saillie (19),
dans lequel le premier élément (10) est adapté pour entrer en prise avec les deuxième (18) et troisième (19) saillies du ressort enveloppant (12) avec un jeu de rotation, ladite mise en prise étant telle que le premier élément (10) est en mesure de mettre en rotation le ressort enveloppant (12) au sein du logement (3) sans bloquer le ressort enveloppant (12) sur le logement (3), et
dans lequel le second élément (11) est adapté pour entrer en prise avec les deuxième (18) et troisième (19) saillies du ressort enveloppant (12) avec un jeu de rotation, ladite mise en prise entre le second élément (11) et les deuxième (18) et troisième (19) saillies étant telle que le second élément (11) étend le ressort enveloppant (12) lors de la rotation forcée du second élément (11) causée par la rotation du premier arbre (5), bloquant ainsi le ressort enveloppant (12) sur le logement (3).

4. Ensemble attelage de remorquage (1) selon la revendication 3, dans lequel les deuxième (18) et troisième (19) saillies du ressort enveloppant (12) s'étendent radialement vers l'intérieur par rapport au premier axe de rotation (A).

5. Ensemble attelage de remorquage (1) selon l'une quelconque des revendications 1 à 4, dans lequel l'ensemble actionneur comprend un actionneur comprenant un moteur électrique.

6. Ensemble attelage de remorquage (1) selon l'une quelconque des revendications 1 à 5, dans lequel le ressort enveloppant comprend un ressort hélicoïdal ou une bobine enroulée.
